# EUROPEAN PATENT SPECIFICATION

(11) **EP 1 215 108 B1**
(45) Date of publication and mention of the grant of the patent: **02.07.2008**
(21) Application number: 01000728.4
(22) Date of filing: 10.12.2001
(51) Int. Cl.: B62D 33/04, B62D 29/00, B62D 31/02

(54) **Method and arrangement for attaching vehicle chassis beams**
Verfahren und Anordnung zum Befestigen von Fahrzeugrahmenlängsträgern
Procédé et dispositif de fixation de poutres pour châssis de véhicule automobile

(30) Priority: 12.12.2000 FI 20002722
(43) Date of publication of application: 19.06.2002
(73) Proprietor: Kulojärvi, Tauno, 33250 Tampere (FI)
(72) Inventor: Kulojärvi, Tauno, 33250 Tampere (FI)
(74) Representative: Kuosmanen, Timo

(56) References cited:
- EP-A- 0 494 116
- EP-A- 0 631 925
- DE-A- 19 716 847
- FR-A- 2 639 411
- SE-C- 514 012

## Description

### FIELD OF THE INVENTION

The invention relates to a method of attaching vehicle beams, the method comprising forming a mounting cavity at least at one end of a first chassis beam belonging to the vehicle chassis structure, the end of the first chassis beam being fork-like, and attaching a second transverse chassis beam immovably to at least one end of the first chassis beam.

The invention further relates to a vehicle chassis structure, comprising a first chassis beam and a second chassis beam transverse to the first chassis beam, which comprises side plates and an intermediate section between them, the chassis structure further comprising attachment of the chassis beams immovably to each other, and a mounting cavity formed at least at one end of the first chassis beam, which has a fork-like end.

### BACKGROUND OF THE INVENTION

The bearing chassis structure of heavy vehicles is usually formed of two longitudinal horizontal beams in the longitudinal direction of the vehicle and of a necessary number of transverse horizontal beams. The body belonging to the vehicle chassis is usually built on top of the bearing chassis. In that case vertical beams are attached to the outermost ends of the above-mentioned transverse beams and the supporting profiles, roof profiles and lining plates belonging to the body can be supported by these vertical beams. Nowadays vertical profiles are attached by welding them on the ends of the transverse profiles. The joining points between the beams have to be provided with bevels for welding. Furthermore, the beams have to be attached to firm jigs during welding so as to control transformations resulting from heat expansion. Attachment of vertical beams by this method is laborious and slow. Furthermore, a proper joint requires skilled workers and high-quality tools.

There is also an alternative prior art method of attaching a horizontal beam to a vertical beam. The beams can be attached using corner fittings, which are attached with screws. Corner fitting of this kind is described e.g. in US patent no. 4 230 361. However, at least two corner fittings are needed for one intersection of beams. Furthermore, each corner fitting is attached with at least four retention screws, which means that there are at least eight retention screws at one intersection. In that case the number of parts needed in the assembly is very large and attachment of the corner fittings to the beams with screws laborious.

The document EP 0 631 925 A, which discloses the preamble of claim 1, describes a method of attaching vehicle beams, the end of the first chassis beam being fork-like with side plates extending beyond an intermediate section in the longitudinal direction of said first chassis beam; arranging a second chassis beam at least partly at the fork-like end of the first beam in the space between the side plates, and attaching the side plates of the first chassis beam immovably to the second chassis beam in said fork-like section. Said document also discloses a chassis according to the preamble of claim 3.

Both the FR 2 639 411 A and the SE 514 012 C show the use of fixing elements arranged in slots of structural members.

### BRIEF DESCRIPTION OF THE INVENTION

The object of the invention is to provide a novel and improved method and chassis structure for attaching vehicle chassis beams to one another.

The method of the invention is defined by the features of claim 1.

The vehicle chassis structure of the invention is defined by the features of claim 3.

The basic idea of the invention is that the chassis structure of a vehicle comprises a first chassis beam and a second transverse chassis beam is attached immovably to at least one end of the first chassis beam. The cross-sectional profile of the first chassis beam comprises substantially parallel side plates arranged at a distance from each other and an intermediate section which connects the plates. For attachment of the second chassis beam the end of the first chassis beam is provided with a mounting cavity, where the side plates of the first chassis beam extend beyond the intermediate section between the side plates in the longitudinal direction of the chassis beam. In that case the side plates of the first chassis beam form protruding fork-like members at the end of the first beam and the second chassis beam is arranged in the space between these fork-like members. At least the sides of the side plates next to the first chassis beam are attached to the protruding side plates at the end of the first chassis beam. The first and the second chassis beam are designed so that the distance between the inner surfaces of the side plates of the first chassis beam corresponds at least approximately to the width of the second chassis beam. The mounting cavity is preferably formed by milling a section corresponding to the depth of the second chassis beam away from between the side surfaces of the first chassis beam.

The joint according to the invention is very firm since the side plates of the first chassis beam extend to the sides of the second beam and support the second chassis beam sideways. Now it is easy to attach the beams at the side plates. The attachment can be implemented in various ways, e.g. by welding, with screws, rivets, etc. Since the fork-like end of the first chassis beam supports the second chassis beam, the attachment is mainly subjected to shear forces which are relatively easy to control. A further advantage is that the mounting cavity is simple to form and the attachment does not require separate and complex connecting pieces. Furthermore, the mounting cavity can determine the position of the intersecting chassis beams in respect to each other, and thus mounting fasteners are not necessarily needed at all, but the mounting cavity always positions the chassis beams perpendicularly or at a desired angle to each other.

The basic idea of a preferred embodiment of the invention is that the second chassis beam is provided with longitudinal mounting slots at least on the surfaces next to the side plates of the first chassis beam. Furthermore, the side plates of the first chassis beam are provided with openings at the mounting cavity for retention screws and shape-locking counterparts for the retention screws are arranged in the mounting slots of the second chassis beam. The chassis beams are attached to each other immovably with retention screws. Depending on the case, two to six retention screws are needed to guarantee a sufficiently firm attachment. Screw fastening of this kind is quick and does not require special skills or tools. Furthermore, bevels for welding are unnecessary. A further advantage of the structure assembled with retention screws over the structure assembled by welding is that it allows use of considerably lighter and simpler assembly fasteners, whereas welding requires massive fasteners that receive the forces generated by the thermal expansion resulting from welding. Such forces do not occur when screws are used for fastening the components. In addition, as is generally known in the field, a screw joint sustains endurance load better than a welded joint.

The basic idea of another preferred embodiment of the invention is that the vehicle chassis comprises at least two longitudinal beams in the longitudinal direction of the vehicle and at least one transverse beam in the cross-direction of the vehicle. The transverse beam extends from the first side of the vehicle chassis to its second side. Both the transverse beam and the longitudinal beam are horizontal but on different levels with respect to each other and thus they intersect. The free ends of the transverse beam are provided with vertical beams. In that case a section corresponding to the measures of the vertical beam is removed from between the side plates of the transverse beam, after which the vertical beams are arranged at the fork-like ends of the transverse beams and attached at the side plates. This chassis structure is simple and light but also firm.

It should be noted that in this application the word 'vehicle' refers to vehicles provided with a chassis structure formed of chassis beams. Such vehicles typically include buses, lorries and other heavy vehicles, including railway rolling stock. The word 'vehicle' also refers to trailers and corresponding mobile transportation equipment.

### BRIEF DESCRIPTION OF THE FIGURES

The invention will be described in greater detail in the accompanying drawings, in which
Figure 1 schematically illustrates part of a vehicle chassis structure according to the invention,
Figure 2 schematically illustrates a joint between a horizontal beam and a vertical beam according to the invention,
Figure 3 schematically illustrates a mounting cavity provided at an end of a chassis beam,
Figure 4 is a schematic cross-sectional view of a preferred chassis beam,
Figure 5 is a schematic top view of a preferred counterpart for a retention screw arranged in a mounting slot of the chassis beam, and
Figure 6 schematically illustrates a joint not belonging to the invention.

In the figures like elements are numbered alike. For the sake of clarity, the figures have been simplified considerably.

### DETAILED DESCRIPTION OF THE INVENTION

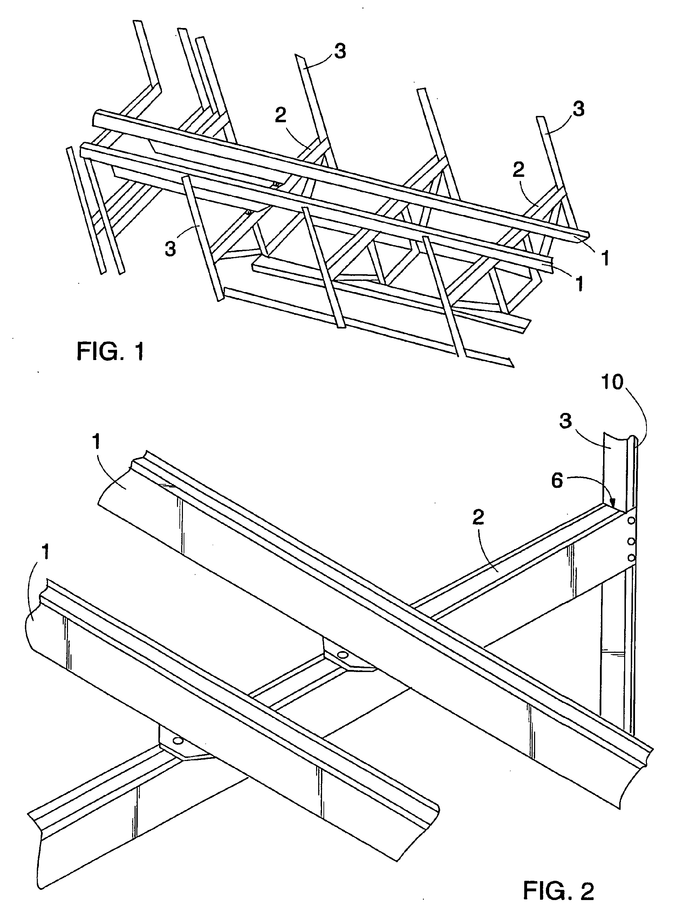

Figure 1 illustrates part of a vehicle chassis structure. In this case the chassis is that of a bus. The chassis comprises two parallel longitudinal beams 1 at a distance from each other and a necessary number of transverse beams 2 arranged transversely, usually perpendicularly, to the longitudinal beams. The transverse beams 2 extend as one piece from the first side of the vehicle to its second side. Vertical beams 3 belonging to the chassis structure are attached to both ends of the transverse beams. Profiles, roof profiles and surface plates belonging to the body can rest on these vertical beams. If necessary, the chassis structure can be supported separately at shafts, engine and gearing.

In addition to the firmness of the chassis and good producibility, attention has to be paid to the chassis weight in vehicle chassis structures to keep the fuel costs reasonable. For example, the bus chassis of Figure 1 can be provided with chassis beams made of aluminium or of another light metal. The joint between a transverse beam and a vertical beam is also light because no separate fastening pieces are needed. Reduction of the chassis weight enables use of an engine motor with a lower capacity, which is also lighter, lighter gearing, etc., and consequently, the entity will be considerably lighter than the prior art solutions.

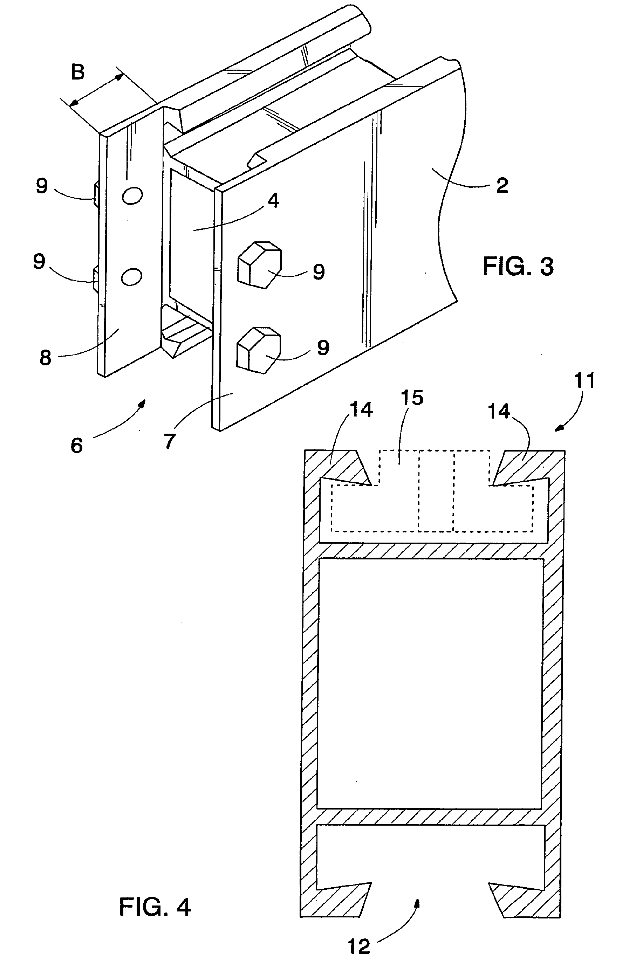

Figure 2 illustrates a T joint between the end of the vertical beam 3 and the end of the transverse beam 2. A mounting cavity 6 corresponding to the width of the vertical beam is provided at the end of the transverse beam e.g. by milling, and the vertical beam is arranged in this cavity. Mounting cavity of this kind is shown in Figure 3. The depth B of the mounting cavity preferably at least approximates to the profile of the vertical beam. Furthermore, the transverse beam and the vertical beams are designed so that the whole mounting cavity for the vertical beam is preferably between the side plates 7 and 8 of the transverse beam. The side plates form a fork-like end in the transverse beam. The transverse beam and the vertical beam arranged in the mounting cavity at its end are preferably attached to each other by a screw joint. In that case the fork-like members at the end of the transverse beam are provided with openings for retention screws 9 and the vertical beam 3 is a profile the joint surfaces of which are provided with mounting slots 10 for receiving the counterpart of the retention screw.

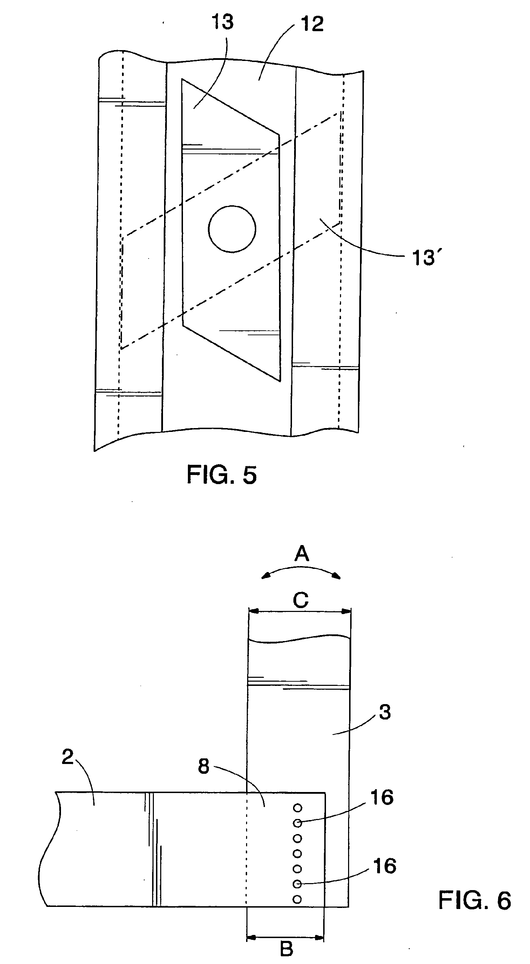

Figure 4 illustrates a preferred cross-sectional profile of the chassis beam. This profile can be used both for vertical beams and for transverse beams. The beam is preferably made of aluminium or an aluminium alloy, but if necessary, other materials, such as steel, can also be employed. The shorter sides 11 of the rectangular profile are provided with mounting slots 12, in which the counterpart of a retention screw according to Figure 5 and known per se can be arranged. The edges of the mounting slot are provided with horizontal portions 14, i.e. the shape of the slot substantially resembles letter T. Other profiles can naturally be used, too. The shape of the counterpart 13 of the retention screw corresponds to that of a parallelogram. By positioning the counterpart 13 parallel with the mounting slot 12 it can be pushed into the mounting slot. When the retention screw 9 is after this tightened with respect to the counterpart, the counterpart turns in the mounting slot and settles against the inner surface 7 and 8 of the side plates in the profile. In that case the counterpart is prevented from turning and the retention screw starts to tighten. In Figure 5 the screwed counterpart 13' is marked with a line of dots and dashes. The screwed counterpart 13' cannot exit the mounting slot 12 but it is supported by the horizontal edges 14 of the mounting slot. Alternatively, a counterpart the cross section of which is designed so that it cannot exit via the fastening cavity can be pushed into the mounting slot from the end of the chassis beam. Counterpart of this kind is illustrated with a broken line 15 in Figure 4.

Figure 6 illustrates an L joint between the end of the vertical beam 3 and the end of the transverse beam 2. Unlike in Figure 2, the vertical beam extends only to one side of the transverse beam. The transverse beam and the vertical beam with the desired cross section are attached to each other by spot welding 16 at the fork-like end. Alternatively, the beams can be attached by gluing, with rivets, with bolts arranged though the structure or with corresponding fastening pins, or with another suitable fastening member. As is seen in the figure, in this case the depth B of the assembly cavity is somewhat smaller than the width C of the vertical beam, but yet it is designed so as to support the vertical beam sufficiently. The intermediate section between the side plates of the transverse beam can be made oblique with respect to the longitudinal axis of the transverse beam, if necessary, in which case the vertical beam can be easily attached at a desired angle A with respect to the transverse beam. Furthermore, the fork-like end can be formed at the lower end of the vertical beam 3.

The fork-like end can be formed in the beam by milling, as stated above. Alternatively, a mounting cavity is implemented by flame cutting or laser cutting. In addition, the beam can be provided with a fork-like end already during its manufacture by arranging the side plates further out than the intermediate section 4.

Even though the invention was described above using the joint between a transverse beam and a vertical beam of a vehicle as an example, the invention can be applied more widely to the attachment of beams belonging to the vehicle chassis structure. For example, it is suitable for attaching the profiles that belong to the body. Furthermore, both beams can be horizontal, in which case the side plates at the fork-like end are arranged horizontally. It is essential that two vehicle chassis beams transverse to each other are attached to each other by providing the end of the first beam with a mounting cavity of the invention where the second beam can be arranged and attached immovably.

The drawings and the related description are only intended to illustrate the inventive concept. The details of the invention may vary within the scope of the claims.

## Claims

1. A method of attaching vehicle beams, the method comprising:
forming a mounting cavity (6) at least at one end of a first chassis beam (2) belonging to the vehicle chassis structure, the end of the first chassis beam (2) being fork-like,
forming the fork-like end of the first chassis beam (2) by removing an intermediate section (4) from a predetermined section between side plates (7, 8) starting from the end of the first chassis beam, the side plates (7, 8) of the first chassis beam (2) extending beyond the intermediate section (4) in the longitudinal direction of the first chassis beam (2),
arranging a second chassis beam (3) at least partly at the fork-like end of the first beam in the space between the side plates (7, 8), and
attaching the side plates (7, 8) of the first chassis beam (2) immovably to the second chassis beam (3) in said fork-like section,
**characterized by**
using the first chassis beam (2) and the second chassis beam (3) having the same cross-sectional profile including mounting slots (12) at the opposite sides (11) of the profile, and
attaching the first chassis beam (2) with at least one retention screw (9) at both side plates (7, 8) of the fork-like end to counterparts (13, 15) arranged in mounting slots (12) provided next to the side plates on the longitudinal side surfaces of the transverse second chassis beam (3).

2. A method according to claim 1, **characterized by** making the end surface of the intermediate section (4) oblique in a predetermined manner and by arranging the second chassis beam (3) in the mounting cavity (6) at an angle according to said oblique surface with respect to the first chassis beam (2).

3. A vehicle chassis structure, comprising
a first chassis beam (2) and a second chassis beam (3) arranged transversely to the first chassis beam (2), which comprises side plates (7, 8) and an intermediate section (4) between them, and
attachment of the chassis beams (2, 3) immovably with respect to each other,
a mounting cavity (6) formed at least at one end of the first chassis beam (2), the first chassis beam (2) comprising a fork-like end, the fork-like section lacks substantially the whole intermediate section (4), and wherein
the second chassis beam (3) being arranged at least partly in the space between the side plates (7, 8) at the fork-like end of the first chassis beam, and
the side plates (7, 8) of the first chassis beam (2) being attached immovably to the second chassis beam (3) in said fork-like section,
**characterized in that**
the first chassis beam (2) and the second chassis beam (3) have the same cross-sectional profile,
the second chassis beam (3) comprises longitudinal mounting slots (12) at least on the sides next to the side plates (7, 8) of the first chassis beam,
both protruding side plates (7, 8) at the end of the first chassis beam (2) are provided with at least one opening for a retention screw (9),
a counterpart (13, 15) of the retention screw is arranged in the mounting slot (12) of the second chassis beam (3) at the joint between the beams, and
the chassis beams (2, 3) are attached to each other by tightening the retention screw (9) into said counterpart (13, 15).

4. A vehicle chassis structure according to claim 3, **characterized in that** the intermediate section (4) of the first chassis beam (2) is made oblique at the fork-like end of the chassis beam in a predetermined manner, the second chassis beam (3) being arranged at an angle according to said oblique surface with respect to the first chassis beam.

## Patentansprüche

1. Verfahren zum Befestigen von Fahrzeugträgern, wobei das Verfahren Folgendes umfasst:
Formen eines Anbringungshohlraums (6) wenigstens an einem Ende des ersten Fahrgestellträgers (2), wobei das Ende des ersten Fahrgestellträgers (2) gabelartig ist,
Formen des gabelartigen Endes des ersten Fahrgestellträgers (2) durch Entfernen einer Zwischensektion (4) von einer vorbestimmten Sektion zwischen Seitenplatten (7, 8), beginnend von dem Ende des ersten Fahrgestellträgers, wobei sich die Seitenplatten (7, 8) des ersten Fahrgestellträgers (2) über die Zwischensektion (4) hinaus in der Längsrichtung des ersten Fahrgestellträgers (2) erstrecken,
Anordnen eines zweiten Fahrgestellträgers (3) wenigstens teilweise an dem gabelartigen Ende des ersten Trägers in dem Raum zwischen den Seitenplatten (7, 8) und
Befestigen der Seitenplatten (7, 8) des ersten Fahrgestellträgers (2) unbeweglich an dem zweiten Fahrgestellträger (3) in der gabelartigen Sektion,
**gekennzeichnet durch**
Verwenden des ersten Fahrgestellträgers (2) und des zweiten Fahrgestellträgers (3), die das gleiche Querschnittsprofil haben, einschließlich von Anbringungsschlitzen (12) an den gegenüberliegenden Seiten (11) des Profils, und
Befestigen des ersten Fahrgestellträgers (2) mit wenigstens einer Sicherungsschraube (9) an den beiden Seitenplatten (7, 8) des gabelartigen Endes an Gegenstücken (13, 15), die in Anbringungsschlitzen (12) angeordnet sind, die nahe den Seitenplatten an den Längsseitenflächen des quer verlaufenden zweiten Fahrgestellträgers (3) bereitgestellt werden.

2. Verfahren nach Anspruch 1, **gekennzeichnet durch** Schrägmachen der Stirnfläche der Zwischensektion (4) auf eine vorbestimmte Weise und **durch** Anordnen des zweiten Fahrgestellträgers (3) in dem Anbringungshohlraum (6) in einem Winkel, entsprechend der schrägen Fläche, in Bezug auf den ersten Fahrgestellträger (2).

3. Fahrzeug-Fahrgestellstruktur, die Folgendes umfasst:
einen ersten Fahrgestellträger (2) und einen quer zu dem ersten Fahrgestellträger (2) angeordneten zweiten Fahrgestellträger (3), der Seitenplatten (7, 8) und eine Zwischensektion (4) zwischen denselben umfasst, und
unbewegliche Befestigung der Fahrgestellträger (2, 3) in Bezug zueinander,
einen Anbringungshohlraum (6), der wenigstens an einem Ende des ersten Fahrgestellträgers (2) geformt ist, wobei der erste Fahrgestellträger (2) ein gabelartiges Ende umfasst, wobei der gabelartigen Sektion im Wesentlichen die gesamte Zwischensektion (4) fehlt und wobei
der zweite Fahrgestellträger (3) wenigstens teilweise in dem Raum zwischen den Seitenplatten (7, 8) an dem gabelartigen Ende des ersten Fahrgestellträgers angeordnet ist und
die Seitenplatten (7, 8) des ersten Fahrgestellträgers (2) unbeweglich an dem zweiten Fahrgestellträger (3) in der gabelartigen Sektion befestigt sind,
**dadurch gekennzeichnet, dass**
der erste Fahrgestellträger (2) und der zweite Fahrgestellträger (3) das gleiche Querschnittsprofil haben,
der zweite Fahrgestellträger (3) längs verlaufende Anbringungsschlitze (12) wenigstens auf den Seiten nahe den Seitenplatten (7, 8) des ersten Fahrgestellträgers umfasst,
die beiden vorspringenden Seitenplatten (7, 8) am Ende des ersten Fahrgestellträgers (2) mit wenigstens einer Öffnung für eine Sicherungsschraube (9) versehen sind,
ein Gegenstück (13, 15) der Sicherungsschraube in dem Anbringungsschlitz (12) des zweiten Fahrgestellträgers (3) an der Verbindung zwischen den Trägern angeordnet ist und
die Fahrgestellträger (2, 3) durch Festziehen der Sicherungsschraube (9) in das Gegenstück (13, 15) aneinander befestigt sind.

4. Fahrzeug-Fahrgestellstruktur nach Anspruch 3, **dadurch gekennzeichnet, dass** die Zwischensektion (4) des ersten Fahrgestellträgers (2) am gabelartigen Ende des Fahrgestellträgers auf eine vorbestimmte Weise schräg gemacht ist, wobei der zweite Fahrgestellträger (3) in einem Winkel, entsprechend der schrägen Fläche, in Bezug auf den ersten Fahrgestellträger angeordnet ist.

## Revendications

1. Procédé de fixation de poutres de véhicule, comprenant les étapes consistant à :
former une cavité de montage (6) au moins au niveau d'une extrémité d'une première poutre de châssis (2) appartenant à la structure de châssis de véhicule, l'extrémité de la première poutre de châssis (2) étant fourchue,
former l'extrémité fourchue de la première poutre de châssis (2) en retirant une section intermédiaire (4) d'une section prédéterminée entre des plaques latérales (7, 8) en partant de l'extrémité de la première poutre de châssis, les plaques latérales (7, 8) de la première poutre de châssis (2) s'étendant au-delà de la section intermédiaire (4) dans la direction longitudinale de la première poutre de châssis (2),
disposer une deuxième poutre de châssis (3) au moins partiellement au niveau de l'extrémité fourchue de la première poutre dans l'espace entre les plaques latérales (7, 8), et
attacher les plaques latérales (7, 8) de la première poutre de châssis (2) de façon inamovible à la deuxième poutre de châssis (3) dans ladite section fourchue,
**caractérisé par** les étapes consistant à
utiliser la première poutre de châssis (2) et la deuxième poutre de châssis (3) ayant le même profil de section transversale comprenant des fentes de montage (12) au niveau des côtés opposés (11) du profil, et
attacher la première poutre de châssis (2) avec au moins une vis de retenue (9) au niveau des deux plaques latérales (7, 8) de l'extrémité fourchue aux parties correspondantes (13, 15) disposées dans les fentes de montage (12) prévues à côté des plaques latérales sur les surfaces latérales longitudinales de la deuxième poutre de châssis transversale (3).

2. Procédé selon la revendication 1, **caractérisé par** l'étape consistant à rendre la surface d'extrémité de la section intermédiaire (4) oblique de manière prédéterminée et à disposer la deuxième poutre de châssis (3) dans la cavité de montage (6) selon un angle selon ladite surface oblique par rapport à la première poutre de châssis (2).

3. Structure de châssis de véhicule, comprenant
une première poutre de châssis (2) et une deuxième poutre de châssis (3) disposées de manière transversale par rapport à la première poutre de châssis (2), qui comprend des plaques latérales (7, 8) et une section intermédiaire (4) entre elles, et
une fixation des poutres de châssis (2, 3) de manière inamovible l'une par rapport à l'autre,
une cavité de montage (6) formée au moins au niveau d'une extrémité de la première poutre de châssis (2), la première poutre de châssis (2) comprenant une extrémité fourchue, la section fourchue manquant sensiblement toute la section intermédiaire (4), et dans laquelle
la deuxième poutre de châssis (3) est disposée au moins partiellement dans l'espace entre les plaques latérales (7, 8) au niveau de l'extrémité fourchue de la première poutre de châssis, et
les plaques latérales (7, 8) de la première poutre de châssis (2) sont attachées de manière inamovible à la deuxième poutre de châssis (3) dans ladite section fourchue,
**caractérisée en ce que**
la première poutre de châssis (2) et la deuxième poutre de châssis (3) ont le même profil de section transversale,
la deuxième poutre de châssis (3) comprend des fentes de montage longitudinales (12) au moins sur les côtés proches des plaques latérales (7, 8) de la première poutre de châssis,
les deux plaques latérales (7, 8) faisant saillie au niveau de l'extrémité de la première poutre de châssis (2) sont dotées d'au moins une ouverture pour une vis de retenue (9),
une partie correspondante (13, 15) de la vis de retenue est disposée dans la fente de montage (12) de la deuxième poutre de châssis (3) au niveau du joint entre les poutres, et
les poutres de châssis (2, 3) sont attachées l'une à l'autre en serrant la vis de retenue (9) dans ladite partie correspondante (13, 15).

4. Structure de châssis de véhicule selon la revendication 3, **caractérisée en ce que** la section intermédiaire (4) de la première poutre de châssis (2) est rendue oblique au niveau de l'extrémité fourchue de la poutre de châssis de manière prédéterminée, la deuxième poutre de châssis (3) étant disposée selon un angle selon ladite surface oblique par rapport à la première poutre de châssis.
